# EUROPEAN PATENT SPECIFICATION

(11) **EP 2 158 077 B1**
(45) Date of publication and mention of the grant of the patent: **13.08.2014**
(21) Application number: 08779337.8
(22) Date of filing: 04.06.2008
(51) Int. Cl.: B32B 7/06, B32B 7/12, B65D 65/40, C09J 9/02, H01B 1/12, B29C 65/76, B65B 69/00

(54) **LAMINATE STRUCTURE UTILIZING ELECTROCHEMICALLY WEAKABLE ADHESIVE**
LAMINATSTRUKTUR MIT EINEM ELEKTROCHEMISCH WEICHMACHBAREN HAFTMITTEL
STRUCTURE DE STRATIFIÉ UTILISANT UN ADHÉSIF POUVANT ÊTRE FRAGILISÉ DE MANIÈRE ÉLECTROCHIMIQUE

(30) Priority: 05.06.2007 SE 0701372
(43) Date of publication of application: 03.03.2010
(73) Proprietor: Stora Enso AB, 791 80 Falun (SE)
(72) Inventor: SANDBERG, Lars, S-663 41 Hammarö (SE); FREDLUND, Mats, S-654 61 Karlstad (SE); REMONEN, Tommi, FI-02700 Grankulla (FI)
(86) International application number: PCT/SE2008/050655
(87) International publication number: WO 2008/150228

(56) References cited:
- WO-A1-97/42637
- WO-A1-2007/142600
- WO-A2-2006/050340
- US-A- 3 679 534
- US-A- 3 679 534
- US-A- 5 100 494
- US-B2- 6 620 308
- US-B2- 6 620 308

## Description

### Field of invention

The present invention relates to a laminate structure which make use of an electrochemically weakenable adhesive and which may easily be broken or weakened.

### Technical Background

It is well known in the art that polymer chains can be broken by the application of a voltage. This is for example discussed in a review article by G.S. Shapoval(Cathodic initiation of reactions of macromolecule formation and degradation, Theoretical and Experimental Chemistry, Volume 30, Number 6, November 1995).

US 6,620,308 B2 discloses a material for use in the airplane industry. As is evident from the published patent, the material has been developed under the supervision of the U.S. Department of the Air Force. The material is developed for use as coatings and adhesives. It is further elaborated in US 6,620,308 that the adhesive bonds and polymeric coatings are commonly used in the assembly and finishing of manufactured goods. It is stated that adhesive bonds are used in place of mechanical fasteners, such as screw, bolts and rivets, to provide bonds with reduced machining costs and greater adaptability in the manufacturing process. It is further discussed that adhesive bonds distribute stresses evenly, reduce the possibility of fatigue, and seal the joints from corrosive species. It further asserts that, similarly, polymer-based coatings are commonly applied to the exterior surface of the manufactured products. These coatings provide protective layers that seal the surface from corrosive reactants, as well as provide a painted surface that can the aesthetically pleasing.

The composition disclosed in US 6,620,308 B2 has a matrix functionality and an electrolyte functionality, wherein the electrolyte functionality is provided by a block copolymer or a graft copolymer. The matrix functionality provides an adhesive bond to a substrate, and the electrolyte functionality provides sufficient ionic conductivity to the composition to support a faradic reaction at an interface with an electrochemically conductive surface in contact with the composition, whereby the adhesive bond is weakened at the interface. The composition may be a phase-separated composition having first regions or substantially matrix functionality and second regions of substantially electrolyte functionality.

US 6,620,308 B2 further discloses a laminate structure comprising two electrically conductive element bonded together by the composition.

One problem with the laminate disclosed in US 6,620,308 is that the distance between the conductive elements might vary, and problems with undesired short-circuiting might occur. In the art, there have been attempts of solving this problem by adding pellets, e.g. glass pellets, to the adhesive. However, the pellets are often uneven distributed in the adhesive and may be in direct contact with the conductive element whereby the contact between the electrochemically weakenable adhesive and the conductive element is interrupted. This may lead to uneven release of the electrochemically weakenable adhesive at the application of a voltage.

### Summary of invention

It is an object of the invention to provide a laminate structure with an even layer of an electrochemically weakenable adhesive.

Another object of the invention is to provide a laminate structure with an ability to prevent undesired, internal electrical short circuit conditions.

These objects, as well as other advantages, have been achieved in accordance with the invention with a laminate structure comprising a first electrically conducting surface, a second electrically conducting surface and a porous, continuous web impregnated in an electrochemically weakenable adhesive, between said first and second conducting surfaces.

The term "electrochemically weakenable adhesive" as used herein is an adhesive that possesses adhesive properties as well as ion conductive properties, which adhesive forms adhesive bonds to an electrically conductive surface in contact with said composition and which bonds are weakened or broken at the application of a voltage to said adhesive. The adhesive thus possesses sufficient ion conductive properties to enable an electrochemical reaction, e.g. a faradic reaction, to occur at the adhesive bonds. Most preferably, the adhesive bond is broken by the electrochemical reaction. Thus, most preferably the adhesive is an electrochemically breakable adhesive.

One example of such an electrochemically weakenable adhesive is the one described in US6620308. The voltage applied in order to weaken the adhesive bonds may be either alternating or direct depending upon the desired manner of weakening of the electrochemically weakenable adhesive. The voltage may e.g. be applied by an external source, such as a battery, by electromagnetic waves, or by providing the electrically conducting surfaces in contact with the electrochemically weakenable adhesive of different materials with different electrode potentials, thereby forming an internal battery.

Included within the definition of "porous, continuous web" are porous cloth-like or paper-like pliable, ion-permeable, woven or non-woven materials. Typical webs are from about 10-200 µm thick. Preferably, the thickness of the continuous web is within the range of 10 - 100 µm, most preferably within the range of 50 - 80 µm.

The term "impregnated" as used herein shall mean that the web has been coated and/or saturated with the adhesive. This can be achieved by coating the web with the adhesive and by letting the adhesive at least partly be absorbed by the web or by soaking the web in a solution of the adhesive.

By providing a laminate structure with a porous, continuous web impregnated with an electrochemically weakenable adhesive, undesired short-circuiting of the laminate is avoided. Furthermore, an even layer of the electrochemically weakenable adhesive is accomplished and the whole surface of the electrically conducting surface is in contact with the electrochemically weakenable adhesive. In this way, the adhesive is evenly weakened and separated from the electrically conducting surface at the application of a voltage.

The laminate according to the invention may for example advantageously be used in package- or distribution solutions. The pre-manufactured laminate of the present invention may, e.g., easily be incorporated in the opening of a package. A first and a second portion of a package, which portions form the opening of the package, might be provided with the laminate according to the invention so that the electrically conducting surfaces are connected to the first and the second portions of the package respectively. The laminate of the present invention is particularly useful in package solutions, since it is often of importance that the package is not accidentally opened, partly or wholly, due to undesired short-circuiting before the user deliberately short-circuits the laminate in order to open the package. Moreover, in many package- or distribution solutions it is of importance that one of the surfaces becomes clean after the electrochemically weakenable adhesive is separated from the surface and that no residues of the adhesive remains on the surface. The present invention ensures an even separation from the surface with no residues on the surface.

In one preferred embodiment of the present invention, the porous, continuous web comprises natural and/or synthetic fibres. Fibrous materials are flexible and facilitates the manufacture of webs with a predetermined thickness. Moreover, the use of fibres makes it possible to optimize the porosity of the web, whereby the ion conductivity of the web can be increased. In this way, lower voltages are needed in order to weaken the adhesvie bonds. Preferably, the porous continuous web is of a fibreglass cloth, which is an easiliy manufactured, flexible material particularly suitable for the above purposes.

In another preferred embodiment, the web is of a porous paper. Paper requires quite low concentrations of the electrochemically weakenable adhesive and is a relative inexpensive raw material.

In another preferred embodiment, the web is of an ion exchange textile. In this embodiment, ion exchange groups are grafted onto a non-woven textile. In this way, the ion conductive properties of the electrochemically weakenable adhesive are further enhanced whereby lower voltages are needed in order to weaken the adhesive. The Ion exchange group grafted onto the non-woven textile can be of a strong or of a weak cat ion exchanger, such as, e.g., sulfonic acid, carboxylic acid, phosphoric acid, phosphoric acid, phenolic, arsenic or selenonic or of a strong or of a weak anion exchanger, such as, e.g., a quaternary amine, a tertiary amine, a secondary amine, or a primary amine. Preferably, the ion exchange group is of a cat ion exchanger, most preferably of a sulfonic acid.

In yet another preferred embodiment, the porous, continuous web has an ion conductivity similar to the one of the electrochemically weakenable adhesive, e.g. an ion conductivity of above 10⁻⁹ S/cm². In this way, the adhesive bonds can be weakened at lower voltages. Most preferably, the porous continuous web has an ion conductivity of above 10⁻⁷ or even above 10⁻⁵ S/cm², which would make it possible to break adhesive bonds at even lower voltages.

The electrochemically weakenable adhesive used in the laminate according to the invention may be of a two components adhesive, such as ElectRelease™ supplied by EIC laboratories. However, according to a preferred embodiment of the invention, the electrochemically weakenable adhesive is of a one component, electrochemically weakenable adhesive, most preferably a one component, thermosetting, electrochemically weakenable adhesive. A one component, thermosetting adhesive facilitates the production of the laminate, since it makes it possible to pre-manufacture the impregnated, porous continuous web. This is made possible since the adhesive will not cure until it is pressed and heated between the conductive surfaces when the laminate is manufactured. Most preferably, the electrochemically weakenable adhesive is of a one component, thermosetting electrochemically weakenable epoxy adhesive, comprising, e.g., one or more of the hardener chosen from the group of; oxygen anhydrides, imidazoles, borontrifloride complex, phenols, mercaptans, or metal oxides.

The laminate may further comprise a second and/or a third layer of an electrochemically weakenable adhesive provided between the porous continuous web and one or both of the electrically conducting surfaces. These additional layers improve the wetting of the conductive surfaces by the adhesive, whereby the strength of the adhesive bonds is increased.

The above objectives have also been achieved by a method of producing a laminate structure, the method comprising the steps of providing a first and a second electrically conducting surfaces; providing an electrochemically weakenable adhesive; impregnate a porous continuous web with said adhesive whereby an impregnated porous continuous web is achieved; drying said impregnated porous continuous web; placing said dried, impregnated porous continuous web between said first and second electrically conducting surfaces and pressing the electrically conducting surfaces together at an increased temperature.

The method according to the invention facilitates the pre-manufacture of a laminate that can be delaminated by the application of a voltage. The pre-manufacturing of a porous web impregnated in an electrochemically weakenable adhesive facilitates the handling of the adhesive. Furthermore, the method according to the invention makes it easier to apply an even layer of the electrochemically weakenable adhesive between the conductive surfaces and it facilitates the achievement of a pre determined distance between the conductive surfaces. Moreover, the use of a porous continuous web, impregnated in the electrochemically weakenable adhesive makes it possible to press the laminate at higher pressures, since short-circuiting is prevented.

In a preferred embodiment, the pressing of the electrically conducting surfaces is performed at a pressure of above 3 bar, preferably above 5 bar and even more preferably above 7 bar. It has been shown that the pressing of a laminate comprising a porous continuous web, impregnated in an electrochemically weakenable adhesive, at pressures above 3 bar, preferably above 5 bar, gives rise to a laminate with enhanced strength but with a preserved, or an increased, ability to be weakened at the application of a voltage, i.e. the laminate achieves an enhanced releasepower. The pressing is preferably performed in at least 3 minutes, preferably for at least 5 minutes, most preferably for at least 7 minutes. This enhances the releasepower even further.

In another preferred embodiment, the method further comprises the step of applying a layer of an electrochemically weakenable adhesive on the first and/or on the second electrically conducting surface prior to the step of placing the dried, impregnated porous continuous web between the first and second electrically conducting surfaces and pressing the surfaces together to form the laminate. In this way, the wetting of the surfaces by the adhesive is improved whereby the strength of the adhesive bonds is increased.

The invention further relates to a method of delaminating, i.e. disbonding, the laminate structure by applying a potential difference across the electrochemically weakenable adhesive.

### Detailed description of a preferred embodiment

The laminate structure of the present invention makes use of an electrochemically weakenable adhesive. According to one embodiment the electrochemically weakenable adhesive is composed of a composition possessing adhesive properties to provide an adhesive bond to an electrically conducting surface and sufficient ion conductive properties to enable a weakening of said bond, wherein said composition comprises at least one ionic compound in an effective amount to give said ion conductive properties. The adhesive and conductive properties may be formed by a single phase or several separate phases.

The adhesive properties provide sufficient adhesive bonds to bind surfaces to one another mechanically or chemically. The adhesive properties may be provided by polymers, polymer resins or fibres that possess adhesive properties. The adhesive properties of the adhesive composition can be provided by at least one polymer, including, but not limited to, a polymer selected from the group consisting of epoxies, acrylics, polyesters, urethanes, polyamides, vinyls and phenolics. The polymer should be present in an amount of at least 10%, preferably in an amount of at least 25 % by weight of the total adhesive composition.

The electrochemically weakenable adhesive can, e.g., be an electrochemically weakenable hot-melt adhesive, an electrochemically weakenable contact adhesive, an electrochemically weakenable pressure sensitive adhesive or an electrochemicaly weakenable thermoset adhesive.

The conductive properties provide the ion conductivity necessary to support a faradic reaction, i.e. an electrochemical reaction in which a material is oxidized or reduced, or some other chemical/physical reaction. The materials are preferably chosen and designed such that the reaction occurs at the interface between one or both of the electrically conducting surfaces and the bonding layer. Alternatively the bonding layer may be designed such that the reaction will occur within the electrochemically weakenable adhesive. This may, e.g., be accomplished by providing islands of a material with electrolyte functionality within the matrix material. The electrolyte functionality may be provided by adding a salt to the material or by modifying the polymer so that it includes ion-coordinating moieties.

The salt can, e.g., be selected from the group consisting of alkali metal, alkaline earth and ammonium salts. Most preferably, the salt includes an anion comprising at least one acidic proton, adding proton conducting functionality to the composition, e.g. bisulfite (HSO4⁻) dihydrogen phosphate (H2PO4⁻), hydrogen phosphate (HPO4²⁻), bicarbonate (HCO3⁻) or boric acid. Preferably, the salt is present in the adhesive in an amount of at least 10% by weight, preferably in an amount within the range of 10-40% by weight of the composition. The ion conductive properties can further be provided by an ionic liquid. The ionic liquid is preferably present in the composition in an amount of at least 10 %, even more preferably in an amount of at least 20 % by weight of the total composition.

The conducting surfaces of the laminate can be of any conducting material, e.g. metals. In one preferred embodiment, the conducting surfaces comprise carbon, e.g. graphite. Alternatively, the conducting surfaces are of conducting polymers. Carbon based materials, e.g. graphite, and conducting polymers can be easily printed on a non conducting surface and are therefore particularly suitable for use as conducting surfaces in packaging and distribution of products. In one preferred embodiment, one of the conductive surfaces is embossed with a pattern. Preferably, the embossed conductive surface forms the cathode when the voltage is applied across the laminate. This gives rise to a larger surface and, thus, a stronger bond to the adhesive.

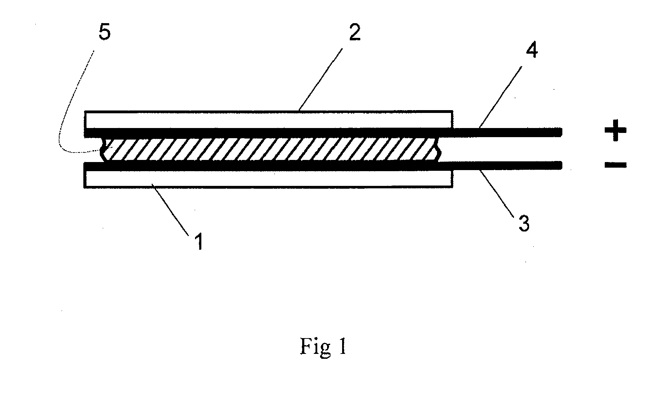

Fig 1 shows a laminate structure according to one embodiment of the invention. The laminate shown in fig. 1, comprises a first electrically conducting active surface (3), printed or laminated on a non-conducting surface (1), and a second electrically conducting active surface (4), printed or laminated on a non-conducting surface (2). The electrically conducting layers are bonded together by a porous, continous web impregnated in an electrochemically weakenable adhesive (5). The laminate may comprise further layers of electrochemically weakenable adhesives provided between the porous, continuous web (5) and the first active surface (3) and/or between the porous, continuous web (5) and the second active surface (4).

When the laminate is to be delaminated, a voltage is applied across the electrochemically weakenable adhesive, whereby bonds in the adhesive are weakened or broken. The voltage applied may be either alternating or direct depending upon the desired manner of weakening of the electrochemically weakenable adhesive. The voltage may e.g. be applied by an external source, such as a battery, by electromagnetic waves, or by designing the laminate with active surfaces of different materials with different electrode potentials, thereby forming an internal battery. If the two active surfaces are connected, e.g. by moving a switch to a position where it connects the two active surfaces, a closed circuit is formed and current will flow through the electrochemically weakenable adhesive thereby causing the adhesive bond to break or to weaken. For example, copper and graphite can be used as active surfaces with different potentials. This design will create a flow of direct current between the active surfaces via the electrochemically weakenable adhesive. The porous, continuous web hinders the laminate to accidentally short-circuit and causing an undesired delaminating of the laminate.

The invention is described in more details with reference to some examples below. It is to be understood that the invention is not limited to the particular process steps and materials disclosed herein.

### Example 1

Cylindrical aluminum rods were glued together using ElectRElease E4 supplied by EIC laboratories. The adhesive was applied to both sides of the aluminum rods and a piece of a (1080) fibreglass web (treated with aminosilane) with a thickness of 60 µm was arranged between the aluminum rods before pressing them together. Before the glass fiber web was placed in between the aluminium rods, it was carefully soaked in ElectReleaseE4 in order to ensure that the pores of the web were filled with the uncured epoxy. The samples were assembled in a fixture in order to control the thickness and the alignment of the aluminum rod. The fixture was left in a lab with controlled climate (23 C, 50% RH) for 50 h to cure. Thereafter, a voltage of 50 V was applied between the aluminum rods.

The two samples delaminated at the interface between the adhesive and the positive electrode (anode) when the fixture was taken apart. The samples showed no tendency of short circuiting prior to the application of the voltage.

### Example 2

A trial was performed in which 1-ethyl-3-methylimidazolium-ethylsulfate, EMIM-ES (ECOENG 121, supplied by Solvent Innovation) was added to a commercially available epoxy adhesive, DER 652-PMK65, supplied by DOW. Dicy (diacynidamide) and 2-MI (2-methyleimidazole) were dissolved in the EMIM-ES, whereupon the EMIM-ES was added to the epoxy adhesive. The ingredients were mixed for 30 minutes at room temperature. The components were present in the thereby prepared composition in accordance with table 2.

**Table 1**

| **Component** | **Weight % of total composition** |
|---|---|
| DER 652-PMK65 (65% solid epoxy) | 77,95% |
| EMIM-ES | 19 % |
| Dicy (diacynidamide hardener) | 2,86 % |
| 2-MI (2-methyleimidazole accelerator) | 0,19 % |

About 30 ml of the thereby prepared composition was poured onto a (1080) fibreglass web (148 mm by 210 mm, with a thickness of 60 µm, treated with aminosilane). The composition was distributed by a doctor blade on the fibreglass web and left to wet it for 30 seconds. After 30 seconds, the excess of the adhesive was scraped off. The fibreglass web impregnated with the adhesive was hardened, hanging in an oven, for 5 minutes at 150 °C. Thereafter, the impregnated fibreglass web was arranged between two aluminium foils with thicknesses of 40 µm. The laminate was pressed at about 8 bar and 170 °C for 7 minutes.

A 27 V potential difference was applied across the laminate, whereupon the laminate delaminated after 14 seconds. The delamination occurred at the conductive surface forming the anode of the laminate and gave rise to a clean surface.

### Example 3

Another trial was performed in which EMIM-ES (ECOENG 121) and Polyethylene glycol (PEG 400) were added to a commercially available epoxy adhesive (DER 652-PMK65, supplied by DOW). Prior to the addition to the epoxy adhesive, Dicy and 2-MI were dissolved in the EMIM-ES. The components were present in the thereby prepared composition in accordance with table 2.

**Table 2**

| **Component** | **Weight % of total composition** |
|---|---|
| DER 652-PMK65 (epoxy) (65 % solid) | 70,5 % |
| EMIM-ES (ECOENG 121) | 17,2 % |
| PEG 400 | 9,56 % |
| Dicy (diacynidamide hardener) | 2,59 % |
| 2-MI (2-methyleimidazole accelerator) | 0,169 % |

About 30 ml of the composition was poured onto a (1080) fibreglass web (150 mm by 200 mm, with a thickness of 60 µm, treated with aminosilane). The composition was distributed by a doctor blade on the fibreglass web and left to wet it for 30 seconds. After 30 seconds, the excess of the adhesive was scraped off. The fibreglass web impregnated with the adhesive was hardened, hanging in an oven, for 5 minutes at 150 °C. Thereafter, the impregnated fibreglass web was arranged between two aluminium foils with thicknesses of 40 µm. The laminate was pressed at about 8 bar and 170 °C for 7 minutes.

A 27 V potential difference was applied across the laminate, whereupon the laminate delaminated after 10 seconds. The laminate showed no tendency of short circuiting before the application of a voltage.

## Claims

1. A laminate structure comprising a first electrically conducting surface, a second electrically conducting surface and a porous, continuous web impregnated in an electrochemically weakenable adhesive possessing adhesive properties to provide an adhesive bond to an electrically conducting surface and sufficient ion conductive properties to enable a weakening of said adhesive bond at the application of a voltage across the adhesive composition, which impregnated continuous web is provided between said first and second electrically conducting surfaces.

2. A laminate structure according to claims 1, wherein the porous, continuous web comprises natural and/or synthetic fibres.

3. A laminate structure according to claim 2, wherein the porous continuous web is of a fibreglass cloth.

4. A laminate structure according to claim 2, wherein the porous continuous web is of paper or paper board.

5. A laminate structure according to claim 2, wherein the porous continuous web/fabric is of a textile fabric to which ion exchange groups have been grafted.

6. A laminate structure according to any of the claims 1-5, wherein the porous, continuous web has a conductivity above 10⁻⁹ S/cm².

7. A laminate structure according to any one of the claims 1-6, wherein the porous continuous web has a conductivity above 10⁻⁷ S/cm², most preferably above 10⁻⁵ S/cm².

8. A laminate structure according to any of the claims 1-7, wherein the electrochemically weakenable adhesive is of a thermosetting, one-part electrochemically weakenable adhesive.

9. A laminate structure according to claim 8, wherein the electrochemically weakenable adhesive is a thermosetting, one-part electrochemically weakenable epoxy adhesive.

10. A laminate structure according to any one of the claims 1-9, comprising a second layer of an electrochemically weakenable adhesive provided between the first electrically conducting surface and the porous, continuous web.

11. A laminate structure according to claim 10, comprising a third layer of an electrochemically weakenable adhesive provided between the second electrically conducting and the porous continuous web.

12. A method of producing a laminate structure comprising the steps of;
providing a first and a second electrically conducting surface,
providing an electrochemically weakenable adhesive,
impregnating a porous continuous web with said electrochemically weakenable adhesive, whereby an impregnated porous continuous web is achieved,
drying said impregnated porous continuous web/fabric,
placing said dried impregnated porous continuous web between said first and second electrically conducting surfaces and pressing the electrically conducting surfaces together at an increased temperature to form the laminate structure.

13. A method according to claim 12, wherein the pressing of the electrically conducting surfaces is performed at a pressure of above 3 bar, preferably above 5 bar.

14. A method according to claim 13, wherein the pressing is performed in at least 5 minutes.

15. A method according to any one of claims 12 - 14, further comprising the step of applying a layer of an electrochemically weakenable adhesive on the first electrically conducting surface after the step of providing a first and a second electrically conducting surface.

16. A method according to claim 15, further comprising the step of applying a layer of an electrochemically weakenable adhesive onto the second electrically conducting surface.

17. A method according to any one of claims 12 - 16, wherein the step of drying the impregnated porous continuous web is performed at a temperature of above 150 °C.

18. A method according to any one of claims 12-17, wherein the step of pressing the electrically conducting surfaces together is performed at a temperature of above 170 °C.

19. A method for delaminating a laminate structure according to any one of claims 1-11 by applying a potential difference across the electrochemically weakenable adhesive.

## Patentansprüche

1. Kaschierte Struktur, bestehend aus einer ersten elektrisch leitenden Oberfläche, einer zweiten elektrisch leitenden Oberfläche und einer porösen durchgängigen Bahn, imprägniert mit einem elektrochemisch weich werdenden Klebstoff, der haftende Eigenschaften besitzt, um eine Klebeverbindung zu einer elektrisch leitenden Oberfläche herzustellen, und der über adäquate Ionenleiteigenschaften verfügt, um ein Abschwächen jener Klebeverbindung beim Anlegen einer Spannung an die klebende Zusammensetzung zu bewirken, welche die imprägnierte durchgängige Bahn zwischen der ersten und der zweiten elektrisch leitenden Oberfläche bereitstellt.

2. Kaschierte Struktur nach Anspruch 1, wobei die poröse, durchgängige Bahn aus natürlichen bzw. synthetischen Fasern besteht.

3. Kaschierte Struktur nach Anspruch 2, wobei die poröse durchgängige Bahn aus einem Glasfaservlies besteht.

4. Kaschierte Struktur nach Anspruch 2, wobei die poröse durchgängige Bahn aus Papier oder Karton besteht.

5. Kaschierte Struktur nach Anspruch 2, wobei die/das poröse durchgängige Bahn/Gewebe aus einem Textilgewebe besteht, auf das Ionenaustauschgruppen aufpolymerisiert wurden.

6. Kaschierte Struktur nach einem der Ansprüche 1-5, wobei die poröse durchgängige Bahn eine Leitfähigkeit von über 10⁻⁹ S/cm² besitzt.

7. Kaschierte Struktur nach einem der Ansprüche 1-6, wobei die poröse durchgängige Bahn über eine Leitfähigkeit von über 10⁻⁷ S/cm², vorzugsweise über 10⁻⁵ S/cm2, verfügt.

8. Kaschierte Struktur nach einem der Ansprüche 1-7, wobei der elektrochemisch weich werdende Klebstoff aus einem duroplastischen, elektrochemisch weich werdenden Einkomponenten-Klebstoff besteht.

9. Kaschierte Struktur nach Anspruch 8, wobei der elektrochemisch weich werdende Klebstoff aus einem duroplastischen, elektrochemisch weich werdenden Einkomponenten-Epoxidklebstoff besteht.

10. Kaschierte Struktur nach einem der Ansprüche 1-9, die eine zweite Schicht eines elektrochemisch weich werdenden Klebstoffs zwischen der ersten elektrisch leitfähigen Oberfläche und der porösen durchgängigen Bahn umfasst.

11. Kaschierte Struktur nach Anspruch 10, die eine dritte Schicht eines elektrochemisch weich werdenden Klebstoffs zwischen der zweiten elektrisch leitenden Oberfläche und der porösen durchgängigen Bahn umfasst.

12. Ein Verfahren zur Produktion einer kaschierten Struktur, bestehend aus den Schritten:
Bereitstellung einer ersten und zweiten elektrisch leitenden Oberfläche,
Bereitstellung eines elektrochemisch weich werdenden Klebstoffs,
Imprägnierung einer porösen durchgängigen Bahn mit dem elektrochemisch weich werdenden Klebstoff, wobei eine imprägnierte poröse durchgängige Bahn erzielt wird,
Trocknen der/des imprägnierten porösen durchgängigen Bahn/Gewebes,
Platzieren der getrockneten, imprägnierten, porösen und durchgängigen Bahn zwischen der ersten und der zweiten elektrisch leitenden Oberfläche und Zusammendrücken der elektrisch leitenden Oberflächen bei einer erhöhten Temperatur zur Bildung der kaschierten Struktur.

13. Verfahren nach Anspruch 12, wobei das Zusammendrücken der elektrisch leitenden Oberflächen mit einem Druck von über 3 bar durchgeführt wird, vorzugsweise mit über 5 bar.

14. Verfahren nach Anspruch 13, wobei das Zusammendrücken mindestens 5 Minuten lang erfolgt.

15. Verfahren nach einem der Ansprüche 12 - 14, ferner umfassend den Schritt des Auftragens einer Schicht eines elektrochemisch weich werdenden Klebstoffs auf die erste, elektrisch leitende Oberfläche nach dem Schritt der Bereitstellung einer ersten und einer zweiten elektrisch leitenden Oberfläche.

16. Verfahren nach Anspruch 15, ferner umfassend den Schritt der Anwendung einer Schicht eines elektrochemisch weich werdenden Klebstoffs auf die zweite elektrisch leitende Oberfläche.

17. Verfahren nach einem der Ansprüche 12 - 16, wobei der Schritt des Trocknens der imprägnierten porösen durchgängigen Bahn bei einer Temperatur von über 150 °C durchgeführt wird.

18. Verfahren nach einem der Ansprüche 12-17, wobei der Schritt des Zusammendrückens der elektrisch leitende Oberflächen bei einer Temperatur von über 170 °C durchgeführt wird.

19. Verfahren zur Delaminierung einer kaschierten Struktur nach einem der Ansprüche 1-11 durch Anlegen eines Potenzialunterschiedes an den elektrochemisch weich werdenden Klebstoff.

## Revendications

1. Structure stratifiée comprenant une première surface électriquement conductrice, une deuxième surface électriquement conductrice et une bande continue poreuse imprégnée dans un adhésif pouvant être affaibli électrochimiquement possédant des propriétés adhésives pour fournir une liaison adhésive à une surface électriquement conductrice et des propriétés de conductivité ionique suffisantes pour permettre un affaiblissement de ladite liaison adhésive au niveau de l'application d'une tension sur la totalité de la composition adhésive, laquelle bande continue imprégnée est disposée entre lesdites première et deuxième surfaces électriquement conductrices.

2. Structure stratifiée selon la revendication 1, dans laquelle la bande continue poreuse comprend des fibres naturelles et/ou synthétiques.

3. Structure stratifiée selon la revendication 2, dans laquelle la bande continue poreuse est un vêtement en fibre de verre.

4. Structure stratifiée selon la revendication 2, dans laquelle la bande continue poreuse est en papier ou en carton.

5. Structure stratifiée selon la revendication 2, dans laquelle la bande/le tissu continu(e) poreux/poreuse est un tissu textile auquel/à laquelle des groupes d'échange d'ions ont été greffés.

6. Structure stratifiée selon l'une quelconque des revendications 1-5, dans laquelle la bande continue poreuse a une conductivité supérieure à 10⁻⁹ S/cm².

7. Structure stratifiée selon l'une quelconque des revendications 1-6, dans laquelle la bande continue poreuse a une conductivité supérieure à 10⁻⁷ S/cm², de préférence supérieure à 10⁻⁵ S/cm².

8. Structure stratifiée selon l'une quelconque des revendications 1-7, dans laquelle l'adhésif pouvant être affaibli électrochimiquement est un adhésif thermodurcissable à une partie pouvant être affaibli électrochimiquement.

9. Structure stratifiée selon la revendication 8, dans laquelle l'adhésif pouvant être affaibli électrochimiquement est un adhésif époxy thermodurcissable à une partie pouvant être affaibli électrochimiquement.

10. Structure stratifiée selon l'une quelconque des revendications 1-9, comprenant une deuxième couche d'adhésif pouvant être affaibli électrochimiquement disposée entre la première surface électriquement conductrice et la bande continue poreuse.

11. Structure stratifiée selon la revendication 10, comprenant une troisième couche d'adhésif pouvant être affaibli électrochimiquement disposée entre la deuxième surface électriquement conductrice et la bande continue poreuse.

12. Procédé de production d'une structure stratifiée comprenant les étapes consistant à ;
fournir une première et une deuxième surface électriquement conductrice,
fournir un adhésif pouvant être affaibli électrochimiquement,
imprégner une bande continue poreuse avec ledit adhésif pouvant être affaibli électrochimiquement, moyennant quoi une bande continue poreuse imprégnée est obtenue,
sécher ladite/ledit bande/tissu continu(e) poreux/poreuse imprégné(e),
placer ladite bande continue poreuse imprégnée séchée entre lesdites première et deuxième surfaces électriquement conductrices et presser les surfaces électriquement conductrices l'une contre l'autre à une température accrue pour former la structure stratifiée.

13. Procédé selon la revendication 12, dans lequel la pression des surfaces électriquement conductrices est effectuée à une pression supérieure à 3 bar, de préférence supérieure à 5 bar.

14. Procédé selon la revendication 13, dans lequel la pression est effectuée pendant au moins 5 minutes.

15. Procédé selon l'une quelconque des revendications 12 - 14, comprenant en outre l'étape consistant à appliquer une couche d'adhésif pouvant être affaibli électrochimiquement sur la première surface électriquement conductrice après l'étape consistant à fournir une première et une deuxième surface électriquement conductrice.

16. Procédé selon la revendication 15, comprenant en outre l'étape consistant à appliquer une couche d'adhésif pouvant être affaibli électrochimiquement sur la deuxième surface électriquement conductrice.

17. Procédé selon l'une quelconque des revendications 12 - 16, dans lequel l'étape consistant à sécher la bande continue poreuse imprégnée est effectuée à une température supérieure à 150 °C.

18. Procédé selon l'une quelconque des revendications 12-17, dans lequel l'étape consistant à presser les surfaces électriquement conductrices l'une contre l'autre est effectuée à une température supérieure à 170 °C.

19. Procédé de délaminage d'une structure stratifiée selon l'une quelconque des revendications 1-11 en appliquant une différence de potentiel sur la totalité de l'adhésif pouvant être affaibli électrochimiquement.
